# EUROPEAN PATENT APPLICATION

(11) **EP 4 835 750 A2**
(43) Date of publication of application: **04.11.2026**
(21) Application number: 26205976.9
(22) Date of filing: 10.01.2024
(51) Int. Cl.: G06N 10/20

(54) **QUANTUM COMPUTATION METHOD, PROGRAM, AND INFORMATION PROCESSING APPARATUS**

(30) Priority: 13.03.2023 JP 2023038346
(62) Document number(s) of the earlier application(s) in accordance with Art. 76 EPC: 24151168.2 / 4 432 173
(71) Applicant: FUJITSU LIMITED, Kawasaki-shi, Kanagawa 211-8588 (JP); OSAKA UNIVERSITY, Suita-shi Osaka 565-0871 (JP)
(72) Inventor: AKAHOSHI, Yutaro, Kawasaki-shi, Kanagawa, 211-8588 (JP); FUJII, Keisuke, Suita-shi, Osaka, 565-0871 (JP)
(74) Representative: Hoffmann Eitle

(57) **Abstract**

An information processing apparatus sets, for a rotation gate that is a quantum gate executed on an encoded logical qubit, a target rotation angle set in the rotation gate to a designated rotation angle, generates a first logical qubit having a predetermined ancilla state based on the designated rotation angle, executes a stochastic rotation operation that results in a forward rotation with the designated rotation angle or in an inverse rotation whose sign is opposite to a sign of the designated rotation angle by using, as input, the first logical qubit and a second logical qubit on which the rotation gate is executed, and repeats a process for generating the first logical qubit and a process for executing the rotation operation while updating the designated rotation angle based on the target rotation angle until the rotation operation results in the forward rotation.

## Description

### FIELD

The embodiments discussed herein relate to a quantum computation method, a program, and an information processing apparatus.

### BACKGROUND

In computation using a quantum computer, quantum computation in accordance with a quantum circuit is executed by performing gate operations on qubits. An individual qubit is the minimum unit of information used in the computation and corresponds to a bit (a classical bit) in a classical computer. Unlike a classical bit, a qubit can represent a superposition state of "0" and "1".

Information about a qubit could be destroyed (an error could occur), for example, by an interaction with an environment or an error in a gate operation. Countermeasures against such an error are quantum error correction and quantum error mitigation.

The quantum error correction is a process for detecting occurrence of an error and correcting the error through encoding (redundancy) in which a plurality of qubits is combined. Hereinafter, qubits that are not encoded will be referred to as "physical qubits", and a group of encoded qubits will be referred to as "logical qubit". The quantum error mitigation is a process in which the computation is continued with an error and the effect of an error is mitigated, for example, by modifying a quantum circuit or extrapolating a measurement result.

A quantum computer that executes quantum computation while executing the quantum error correction on logical qubits is called "fault-tolerant quantum computer (FTQC)". An FTQC is able to execute various kinds of quantum computations by combining predetermined basic gates (this set is referred to as "universal gate set"). The predetermined basic gates are an H gate, a CNOT gate, an S gate, and a T gate. The H gate, the CNOT gate, and the S gate are quantum gates for Clifford gates, and the T gate is a quantum gate for a non-Clifford gate. A set of these basic gates are called "Clifford + T".

Various techniques have been proposed in relation to FTQCs. For example, there has been proposed a fault-tolerant computation method that reduces the number of physical qubits and physical quantum gates used in a quantum Clifford circuit. There has also been proposed a method for designing a circuit that stochastically executes non-unitary computation. In addition, there has been proposed a technique for effectively increasing the code distance and the number of T gates by integrating the quantum error correction and the quantum error mitigation into an efficient FTQC architecture while sacrificing a certain sampling overhead. In addition, there has been proposed a logical Clifford + T circuit implementation method for mitigating the errors caused by noisy logical T gates by using a pseudo probability method while protecting Clifford operations from noise by the quantum error correction. There has also been proposed a technique for allowing a magic state to have a fidelity better than a 2-qubit gate used to generate the magic state. There has also been proposed a method referred to as Lattice surgery that enables efficient execution of logical Clifford gates by using a surface code on a quantum computer limited to Two-Dimensional Nearest-Neighbor (2DNN) connectivity as typified by a superconducting method, for example.
Japanese National Publication of International Patent Application No. 2022-520293
Publication of U.S. Patent Application No. 2005/0167658
Yasunari Suzuki, Suguru Endo, Keisuke Fujii and Yuuki Tokunaga, "Quantum Error Mitigation as a Universal Error Reduction Technique: Applications from the NISQ to the Fault-Tolerant Quantum Computing Eras", PRX QUANTUM 3, 010345(2022), the American Physical Society, 18 March 2022
Christophe Piveteau, David Sutter, Sergey Bravyi, Jay M. Gambetta, and Kristan Temme, "Error Mitigation for Universal Gates on Encoded Qubits", PHYSICAL REVIEW LETTERS, Volume 127, Issue 20, 12 November 2021
Ying Li, "A magic state's fidelity can be superior to the operations that created it" New Journal of Physics, Volume 17, 13 February 2015
Clare Horsman, Austin G Fowler, Simon Devitt, Rodney Van Meter, "Surface code quantum computing by lattice surgery", New Journal of Physics, 14(12), 123001(27pp), 7 December 2012
V. Kliuchnikov, D. Maslov and M. Mosca, "Practical Approximation of Single-Qubit Unitaries by Single-Qubit Quantum Clifford and T Circuits," in IEEE Transactions on Computers, vol. 65, no. 1, pp. 161-172, 1 Jan. 2016

In fault-tolerant quantum computation using Clifford + T, it is possible to rotate a logical qubit with a predetermined rotation angle φ (irrational multiple of 2π) around a certain rotation axis by using a T gate. A rotation with an arbitrary angle is possible by repeating a rotation with a rotation angle φ. However, in order to achieve a rotation with an arbitrary angle with sufficient accuracy, even if the best method currently known is used, the gate operation of a T gate needs to be repeated approximately 100 times, and as a result, the computation time is extended.

### SUMMARY

It is an object in one aspect of the embodiments to shorten the computation time in fault-tolerant quantum computation.

In one aspect, there is provided a computer program that causes a computer to execute a process including: setting, for a rotation gate that is a quantum gate executed on an encoded logical qubit, a target rotation angle set in the rotation gate to a designated rotation angle; generating a first logical qubit having a predetermined ancilla state based on the designated rotation angle; executing a stochastic rotation operation that results in a forward rotation with the designated rotation angle or in an inverse rotation whose sign is opposite to a sign of the designated rotation angle by using, as input, the first logical qubit and a second logical qubit on which the rotation gate is executed; and repeating a process for generating the first logical qubit and a process for executing the rotation operation while updating the designated rotation angle based on the target rotation angle until the rotation operation results in the forward rotation.

### BRIEF DESCRIPTION OF DRAWINGS

FIG. 1 illustrates an example of a quantum computation method according to a first embodiment;
FIG. 2 illustrates an example of a system configuration according to a second embodiment;
FIG. 3 illustrates a hardware example of a quantum computation system;
FIG. 4 illustrates characteristics of qubits;
FIG. 5 illustrates an example of quantum error correction;
FIG. 6 illustrates an example of basic gates used in fault-tolerant quantum computation;
FIG. 7 illustrates an example of a circuit that realizes a T gate;
FIG. 8 illustrates an example of a rotation to an arbitrary rotation angle by using a T gate;
FIG. 9 illustrates an example of a quantum circuit for executing a gate operation for an arbitrary rotation;
FIG. 10 illustrates an example of repetition executed until a target rotation angle is obtained;
FIG. 11 illustrates an example of a quantum circuit for preparing an ancilla state;
FIG. 12 illustrates an example of expansion to a surface code;
FIG. 13 illustrates an example of error detection based on syndrome measurement;
FIG. 14 illustrates an example of X-syndrome measurement;
FIG. 15 illustrates an example of Z-syndrome measurement;
FIG. 16 illustrates an example of a quantum circuit for detecting an error of a [[4,2,2]] code;
FIG. 17 is a block diagram illustrating an example of functions of the quantum computation system;
FIG. 18 illustrates data flow among the functions;
FIG. 19 is a block diagram illustrating an example of functions of a Clifford operation execution unit;
FIG. 20 is a block diagram illustrating an example functions of an arbitrary rotation execution unit;
FIG. 21 is a flowchart illustrating a procedure of a quantum computation process;
FIG. 22 is a flowchart illustrating an example of a procedure of a quantum circuit execution process;
FIG. 23 illustrates an example of a numerical computation result indicating a logical error rate;
FIG. 24 illustrates an example of a computation result indicating an ancilla state error rate; and
FIG. 25 illustrates an example of arrangement of logical qubits.

### DESCRIPTION OF EMBODIMENTS

Hereinafter, the embodiments will be described with reference to the drawings. The individual embodiment may be realized by combining a plurality of embodiments as long as there is no conflict.

### [First Embodiment]

A first embodiment is a quantum computation method for shortening the computation time in fault-tolerant quantum computation.

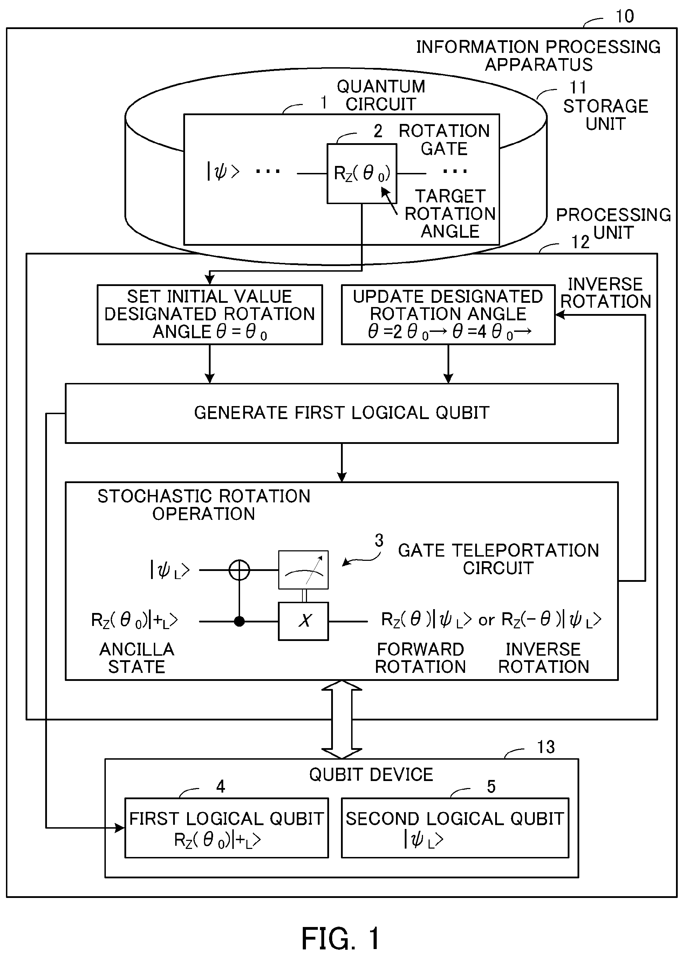

FIG. 1 illustrates an example of the quantum computation method according to the first embodiment. FIG. 1 illustrates an information processing apparatus 10 that executes the quantum computation method according to the first embodiment. The information processing apparatus 10 executes the quantum computation method according to the first embodiment by executing a quantum computation program, for example.

The information processing apparatus 10 includes a storage unit 11, a processing unit 12, and a qubit device 13. The storage unit 11 is, for example, a memory or a storage device of the information processing apparatus 10. The processing unit 12 is, for example, a processor or an arithmetic circuit of the information processing apparatus 10. The qubit device 13 is a device that realizes a qubit, which is a basic unit of information in quantum computation. The qubit device 13 has a plurality of physical qubits. By combining a plurality of physical qubits, the information processing apparatus 10 generates encoded logical qubits.

The storage unit 11 stores a quantum circuit 1 in which the procedure of a quantum computation to be executed is described. The quantum circuit 1 is described by using quantum gates executable in fault-tolerant quantum computation, for example. One of the quantum gates executable in fault-tolerant quantum computation is a rotation gate 2 indicating a rotation operation with an arbitrary angle.

The processing unit 12 executes a fault-tolerant quantum computation based on the quantum circuit 1. For example, the processing unit 12 generates a plurality of encoded logical qubits by using physical qubits in the qubit device 13. Next, the processing unit 12 executes the gate operations of the quantum gates described in the quantum circuit 1 on the logical qubits. The processing unit 12 realizes the fault-tolerant quantum computation by executing error detection and error correction while executing the gate operations on the logical qubits.

For example, the processing unit 12 sequentially executes the quantum gates described in the quantum circuit 1. When a quantum gate executed on an encoded logical qubit is the rotation gate 2, the processing unit 12 sets a target rotation angle θ₀ set in the rotation gate 2 to the initial value of a designated rotation angle θ (θ₀ and θ are real numbers). Next, the processing unit 12 generates a first logical qubit 4 having a predetermined ancilla state based on the designated rotation angle. For example, the processing unit 12 generates a first logical qubit 4 having an ancilla state representing R_{Z}(θ₀)|+>. This ancilla state R_{Z}(θ₀)|+> is expressed as R_{Z}(θ₀)|+_{L}> in FIG. 1, so as to clearly indicate that the qubit is in a logical qubit state.

The processing unit 12 executes a rotation operation in accordance with a gate teleportation circuit 3 by using, as input, the first logical qubit 4 and a second logical qubit 5 (state |ψ_{L}>) on which the rotation gate 2 is executed. The gate teleportation circuit 3 is a quantum circuit indicating a stochastic gate operation that results in a forward rotation with the designated rotation angle θ or in an inverse rotation whose sign is opposite to that of the designated rotation angle θ. For example, the stochastic gate operation results in the forward rotation with a probability of 1/2 and the inverse rotation with a probability of 1/2.

The processing unit 12 repeats the process for generating the first logical qubit 4 and the process for executing the rotation operation while updating the designated rotation angle based on the target rotation angle until the rotation operation results in the forward rotation. For example, when the rotation operation executed by using, as input, the first logical qubit generated by applying a first designated rotation angle results in the inverse rotation, the processing unit 12 sets an angle twice the first designated rotation angle as a second designated rotation angle applied to the next process for generating the first logical qubit. In this case, if the first rotation operation (θ = θ₀) results in the inverse rotation, the designated rotation angle θ is updated to 2θ₀. If the second rotation operation (θ = 2θ₀) results in the inverse rotation, the designated rotation angle θ is updated to 4θ₀.

Whether the rotation operation has resulted in the forward rotation or the inverse rotation is determined based on the result of measurement executed in the process of the execution of the gate teleportation circuit 3. For example, the processing unit 12 determines that the rotation operation has resulted in the forward rotation if the measurement result indicates "1" and that the rotation operation has resulted in the inverse rotation if the measurement result indicates "0".

As described above, the processing unit 12 is able to execute an arbitrary rotation to the target rotation angle θ₀ by repeating the generation of the first logical qubit 4 and the execution of the stochastic rotation operation while updating the designated rotation angle θ until the rotation operation results in the forward rotation. To achieve the forward rotation with the target rotation angle θ₀, two rotation operations for an arbitrary rotation are executed on average. Thus, a fewer number of gate operations are needed, and the computation time is consequently shortened. Since a fewer number of gate operations are needed, unnecessary error accumulation is prevented. In addition, because a gate operation using an enormous number of physical qubits as in magic state distillation is not executed in the execution of an arbitrary rotation, a fewer number of physical qubits are used.

For example, the processing unit 12 generates a first logical qubit 4 coded by using a [[4,2,2]] code which represents the state of two logical qubits with four physical qubits and whose code distance is 2. By using this coding, first logical qubits 4 having fewer errors are generated.

If the code distance of the second logical qubit 5 is greater than 2, the processing unit 12 expands the code distance of the [[4,2,2]] code to a predetermined code distance, so as to generate a first logical qubit 4 having the predetermined code distance. In this way, the processing unit 12 is able to generate a first logical qubit 4 that is encoded by using a [[4,2,2]] code and that has a code distance matching the accuracy needed for the quantum computation.

There are cases in which an error is detected about the ancilla state of the first logical qubit 4. In this case, the processing unit 12 redoes the process for generating the first logical qubit 4 having an ancilla state. In this way, the processing unit 12 generates first logical qubits 4 having ancilla states with a low error rate.

When the rotation operation results in the inverse rotation and the designated rotation angle θ is updated, the angle twice the currently designated rotation angle θ could exceed π. In this case, it is possible to set a smaller absolute value for the rotation angle by inverting the sign of the rotation and executing the rotation in the opposite direction, rather than by setting the angle twice the currently designated rotation angle θ as the next designated rotation angle θ. Thus, for example, if a remainder obtained by dividing the angle twice the first designated rotation angle by 2π is 0 or greater and is less than π, the processing unit 12 sets an angle corresponding to the remainder as the second designated rotation angle. If the remainder is greater than π and is 2π or less, the processing unit 12 sets an angle obtained by subtracting 2π from the remainder as the second designated rotation angle. In this way, it is possible to prevent the designated rotation angle θ from becoming too large and to prevent problems that could be caused by an excessively large rotation angle (for example, increase in error rate) from occurring.

### [Second Embodiment]

A second embodiment is a quantum computation system for realizing universal quantum computation.

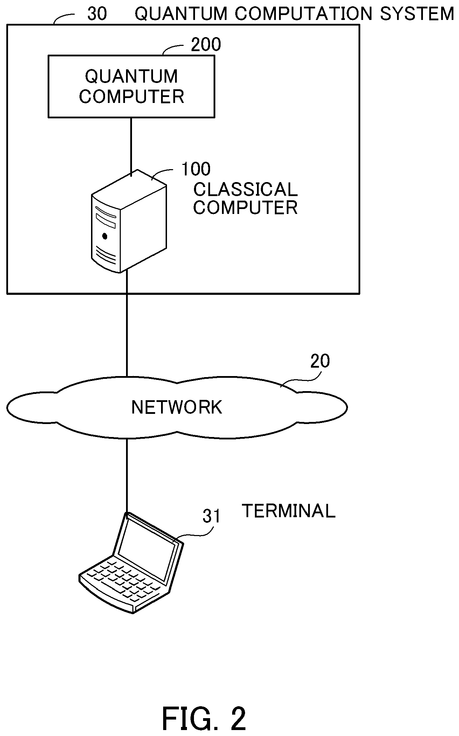

FIG. 2 illustrates an example of a system configuration according to the second embodiment. A quantum computation system 30 includes a classical computer 100 and a quantum computer 200. The classical computer 100 is a computer, which is a so-called von Neumann computer. The quantum computer 200 is a non-von Neumann computer to which the principles of quantum mechanics are applied. The classical computer 100 is connected to a terminal 31 via a network 20, and the terminal is a von Neumann computer used by a user.

The user uses the terminal 31 to create a quantum circuit for solving a target problem by using quantum computation. The created quantum circuit is transmitted from the terminal to the quantum computation system 30. In the quantum computation system 30, the classical computer 100 and the quantum computer 200 operate in coordination with each other to execute quantum computation in accordance with the acquired quantum circuit. Next, the quantum computation system 30 transmits a computation result to the terminal 31.

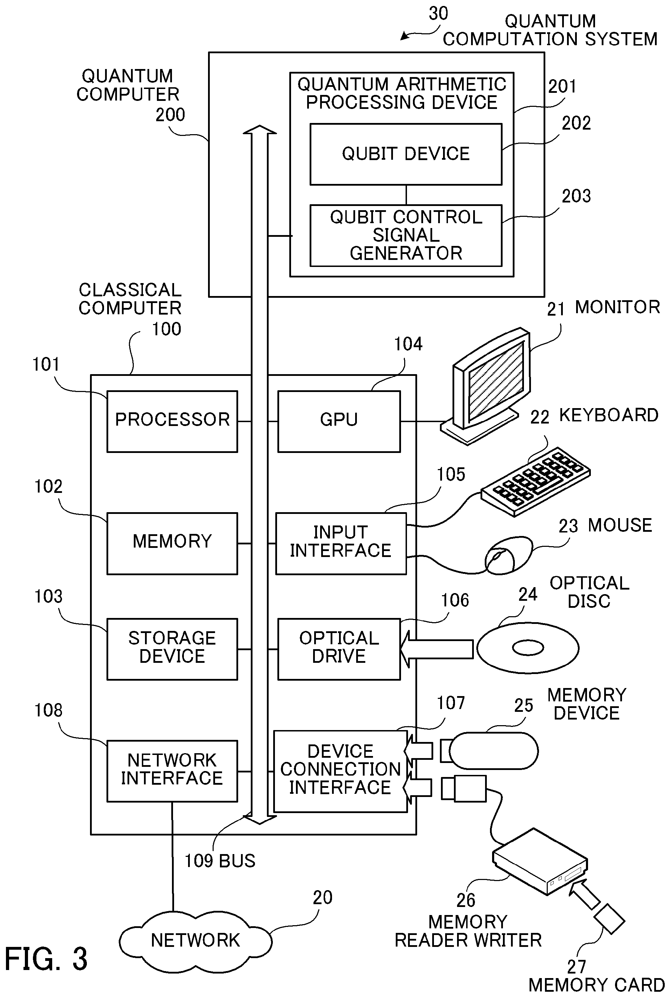

FIG. 3 illustrates a hardware example of the quantum computation system. The classical computer 100 is comprehensively controlled by a processor 101. The processor 101 is connected to a memory 102 and a plurality of peripheral devices via a bus 109. The processor 101 may be a multiprocessor. The processor 101 is, for example, a central processing unit (CPU), a micro processing unit (MPU), or a digital signal processor (DSP). At least one of the functions realized by causing the processor 101 to execute a program may be realized by an electronic circuit such as an application specific integrated circuit (ASIC) or a programmable logic device (PLD).

The memory 102 is used as a main storage device of the classical computer 100. At least one of the operating system (OS) programs and application programs executed by the processor 101 is temporarily stored in the memory 102. In addition, various kinds of data used for processing executed by the processor 101 is stored in the memory 102. For example, a volatile semiconductor storage device such as a random-access memory (RAM) is used as the memory 102.

The peripheral devices connected to the bus 109 are a storage device 103, a graphics processing unit (GPU) 104, an input interface 105, an optical drive 106, a device connection interface 107, and a network interface 108.

The storage device 103 electrically or magnetically reads and writes data on its internal recording medium. The storage device 103 is used as an auxiliary storage device of the classical computer 100. OS programs, application programs, and various kinds of data are stored in the storage device 103. For example, a hard disk drive (HDD) or a solid-state drive (SSD) may be used as the storage device 103.

The GPU 104 is an arithmetic device that executes image processing. The GPU 104 is an example of a graphic controller. The GPU 104 is connected to a monitor 21. The GPU 104 displays an image on the screen of the monitor 21 in accordance with a command from the processor 101. Examples of the monitor 21 include a display device using organic electroluminescence (EL) and a liquid crystal display device.

The input interface 105 is connected to a keyboard 22 and a mouse 23. The input interface 105 transmits a signal transmitted from the keyboard 22 or the mouse 23 to the processor 101. The mouse 23 is an example of a pointing device, and a different pointing device may alternatively be used. Examples of the different pointing device include a touch panel, a tablet, a touchpad, and a trackball.

The optical drive 106 uses laser light or the like, so as to read and write data on an optical disc 24. The optical disc 24 is a portable recording medium on which data has been recorded such that the data is readable by optical reflection. Examples of the optical disc 24 include a digital versatile disc (DVD), a DVD-RAM, a compact disc read-only memory (CD-ROM), and a CD-Recordable (CD-R)/CD-Rewritable (CD-RW).

The device connection interface 107 is a communication interface for connecting peripheral devices to the classical computer 100. For example, a memory device 25 and a memory reader writer 26 are connectable to the device connection interface 107. The memory device 25 is a recording medium having a function of communicating with the device connection interface 107. The memory reader writer 26 is a device that reads and writes data on a memory card 27. The memory card 27 is a card-type recording medium.

The network interface 108 is connected to the network 20. The network interface 108 exchanges data with other computers or communication devices via the network 20. The network interface 108 is a wired communication interface connected to a wired communication device such as a switch or a router via a cable, for example. Alternatively, the network interface 108 may be a wireless communication interface wirelessly connected to a wireless communication device such as a base station or an access point via radio waves.

The quantum computer 200 and the classical computer 100 share the bus 109. The quantum computer 200 is able to perform information communication with the elements in the classical computer 100 via the bus 109.

The quantum computer 200 includes a quantum arithmetic processing device 201 connected to the bus 109. The quantum arithmetic processing device 201 executes a gate operation on a qubit based on a quantum gate described in a quantum circuit and measures the state of the qubit. The quantum arithmetic processing device 201 includes a qubit device 202 and a qubit control signal generator 203. The qubit device 202 holds the states of a plurality of qubits and executes gate operations on these qubits. The qubit control signal generator 203 generates a control signal instructing a gate operation on a qubit or measurement of a qubit.

The quantum computation system 30 is able to realize the process functions according to the second embodiment by using the above-described hardware. The information processing apparatus 10 according to the first embodiment may also be realized by the same hardware as that of the quantum computation system 30 illustrated in FIG. 3.

The classical computer 100 realizes the process functions according to the second embodiment by executing a program recorded in a computer-readable recording medium, for example. The program in which the process contents executed by the classical computer 100 are described may be recorded in various kinds of recording media. For example, the program executed by the classical computer 100 may be stored in the storage device 103. The processor 101 loads at least one of the programs in the storage device 103 to the memory 102 and executes the program. The program executed by the classical computer 100 may be recorded in a portable recording medium such as the optical disc 24, the memory device 25, or the memory card 27. For example, under control of the processor 101, the program stored in the portable recording medium is first installed in the storage device 103, and next becomes executable. Alternatively, the processor 101 may directly read the program from the portable recording medium and execute the program.

Next, why realizing FTQCs is needed and technical problems in realizing FTQCs will be described.

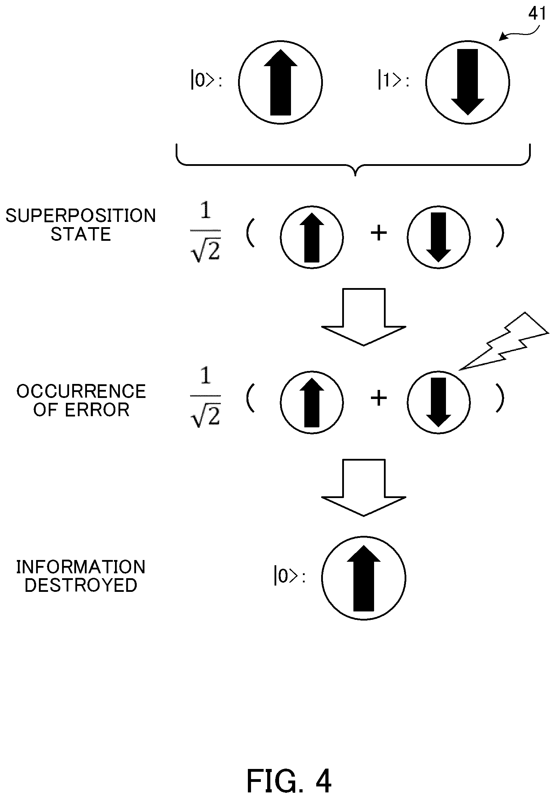

FIG. 4 illustrates characteristics of qubits. A qubit 41, which is the minimum unit of information in the quantum computer 200, is settable in a state |0>, a state |1>, or a superposition state of |0> and |1>. In the superposition state, the probability that the measured value of the qubit 41 indicates |0> or |1> is stochastically determined. For example, when the probability of |0> and the probability of |1> are the same, the superposition state of this qubit 41 is expressed as "2^{-1/2}(|0>+|1>)".

The information about the qubit 41 could be destroyed by an interaction with an environment, an error in an operation, or the like (an error could occur). For example, if the superposition state is destroyed by an error, the state of the qubit 41 could change to the state |0>. To improve the computation accuracy, a qubit in which an error has occurred needs to be detected, and the state of this qubit needs to be corrected to its correct state.

Thus, a technique referred to as quantum error correction has been proposed. In quantum error correction, encoding is executed by combining a plurality of qubits. When encoding is executed, the state of one or a plurality of logical qubits is expressed by a plurality of physical qubits used in the encoding. Based on the overall state of the plurality of encoded qubits, a qubit in which an error has occurred is detected and corrected.

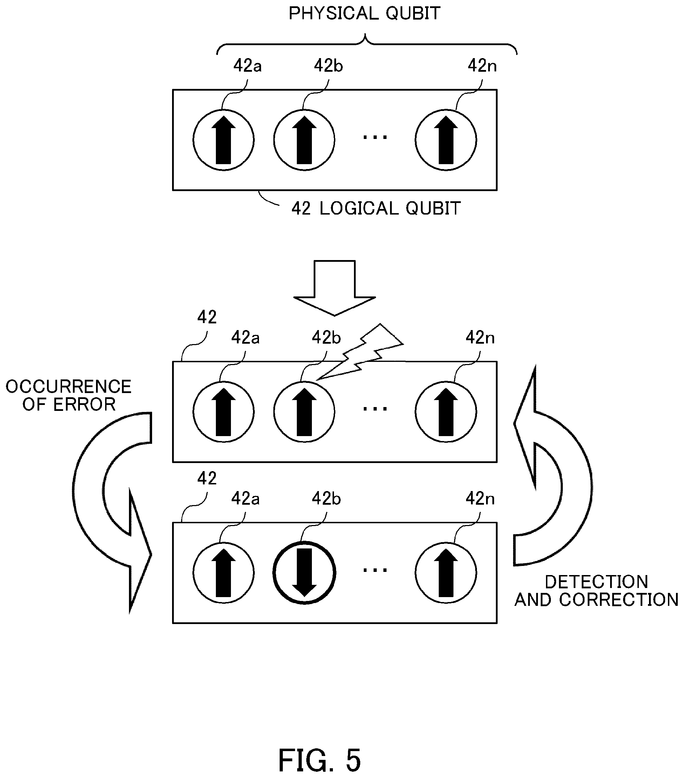

FIG. 5 illustrates an example of the quantum error correction. As illustrated in FIG. 5, a logical qubit 42 is defined by a plurality of physical qubits 42a, 42b, ..., and 42n. The example in FIG. 5 assumes that the state of each of the plurality of physical qubits 42a, 42b, ..., 42n represents |0>, an error occurs, and the state of the physical qubit 42b is consequently inverted to |1>. In this case, the error is detected based on information obtained from the state of each of the plurality of physical qubits 42a, 42b, ..., and 42n. Next, the physical qubit 42b in which the error has occurred is determined, and the state of the physical qubit 42b is corrected.

By executing the quantum error correction in this way as needed, even if an error occurs in a physical qubit, as long as the number of errors is in an allowable range, the logical qubit 42 is maintained in its correct state. It is possible to realize the quantum computation while performing the quantum error correction on logical qubits by combining predetermined basic gates.

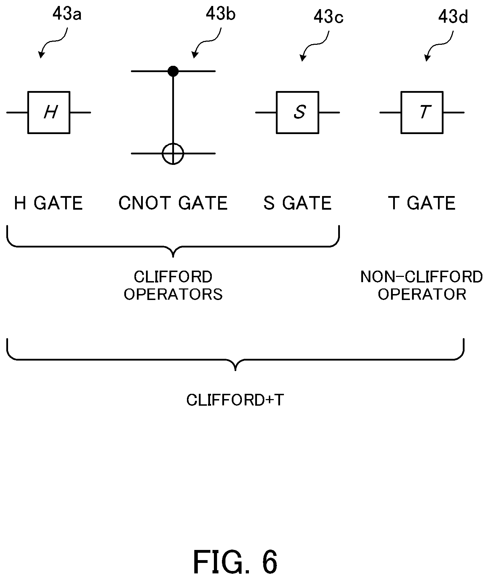

FIG. 6 illustrates an example of basic gates used in fault-tolerant quantum computation. For example, the basic gates used in quantum computation while performing the quantum error correction are an H gate 43a, a CNOT gate 43b, an S gate 43c, and a T gate 43d. The H gate 43a is called a Hadamard gate and is a quantum gate that rotates a qubit state by 180 degrees around an axis that is tilted at an angle of 45 degrees between the Z axis and the X axis. The CNOT gate 43b is a quantum gate that maintains the state of the target qubit if the state of the control qubit represents |0> and inverts the state of the target qubit (|0> to |1> or |1> to |0>) if the state of the control qubit represents |1>. The S gate 43c is a quantum gate that rotates the state by π/2 around the Z axis. The T gate 43d is a quantum gate that rotates the state by π/4 around the Z axis.

Among these quantum gates, the H gate, the CNOT gate, and the S gate are called "Clifford gates". In contrast, the T gate is called "non-Clifford gate". The basic gates in FIG. 6 are collectively called "Clifford + T". "Clifford + T" used in the computation by the quantum computer 200 plays a similar role to AND, XOR, and NOT used in the classical computer 100. That is, it is possible to execute various kinds of quantum computations by combining the quantum gates of "Clifford + T".

The T gate of Clifford + T becomes executable by combining a gate teleportation circuit and a qubit state called "magic state".

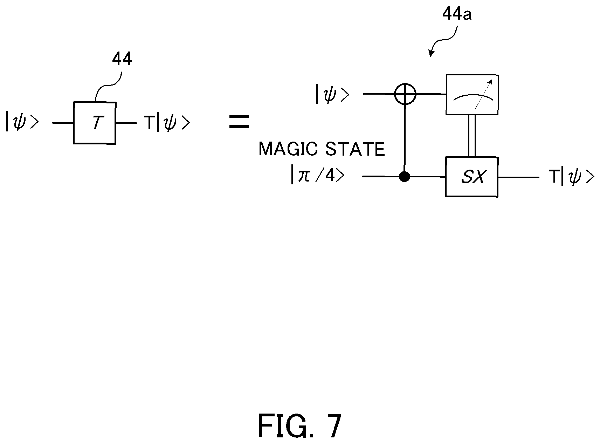

FIG. 7 illustrates an example of a circuit that realizes a T gate. A gate teleportation circuit 44a realizes a gate operation that changes a state |ψ> of a qubit to T|ψ> by applying a T gate 44 to this qubit. Assuming that the state of the first qubit inputted to the gate teleportation circuit 44a represents |ψ>, a state |π/4> is inputted as the second qubit (ancilla qubit). This state |π/4> is called "magic state". The magic state is a logical state expressed by a logical quantum gate.

The gate teleportation circuit 44a includes a CNOT gate that receives the second qubit as the control qubit and the first qubit as the target qubit. After the CNOT gate, the state of the first qubit is measured. If the measurement result represents |0>, no gate operation is executed on the second qubit. If the measurement result represents |1>, the gate operations of an S gate and an X gate (expressed as "SX" in FIG. 7) are executed on the second qubit. The CNOT gate, the S gate, and the X gate of the gate teleportation circuit 44a are all gate operations executed on encoded logical qubits.

In fault-tolerant quantum computation using Clifford + T, an enormous number of physical qubits are used. Typically, one million physical qubits or more are used. Most of the enormous number of physical qubits (for example, 90% or greater) are used for an arbitrary angle of rotation of a logical qubit. For an arbitrary angle of rotation, many gate operations based on a T gate are executed.

A rotation gate based on a rotation angle θ and rotation axes n = (nₓ, n_{y}, n_{z}) is expressed by equation (1). ${e}^{- i \frac{θ}{2} \left({n}_{x}X+{n}_{y}Y+{n}_{z}Z\right)} = cos \frac{θ}{2} ⋅ I - i sin \frac{θ}{2} ⋅ \left({n}_{x}X+{n}_{y}Y+{n}_{z}Z\right)$ (1)

A gate operation based on a T gate is expressed by equation (2). $T = {e}^{- \frac{π}{8} Z} = cos \frac{π}{8} ⋅ I - i sin \frac{π}{8} ⋅ Z$ (2)

By applying the gate operation expressed by equation (2) to equation (1), it is seen that the rotation is a rotation with angle "π/4" around the Z axis.

If an H gate is combined with a T gate, a gate operation expressed by equation (3) is obtained. $HTH = {e}^{- i \frac{π}{8} X} = cos \frac{π}{8} ⋅ I - i sin \frac{π}{8} ⋅ X$ (3)

The gate operation expressed by equation (3) is a rotation with angle "π/4" around the X axis. The multiplication of equation (2) by equation (3) results in equation (4). ${e}^{- i \frac{π}{8} Z} {e}^{- i \frac{π}{8} X} = {cos}^{2} \frac{π}{8} ⋅ I - i sin \left(cos\frac{π}{8}\left(X+Z\right)+sin\frac{π}{8}Y\right)$ (4)

The gate operation expressed by equation (4) is a rotation with a rotation angle φ that satisfies cos(φ/8) = cos²(π/8) around a rotation axis n = (cos(π/8), sin(π/8), cos(π/8)). The realized rotation angle φ is an irrational multiple of 2π. By repeating this rotation with the rotation angle φ, a rotation to an arbitrary angle is realized.

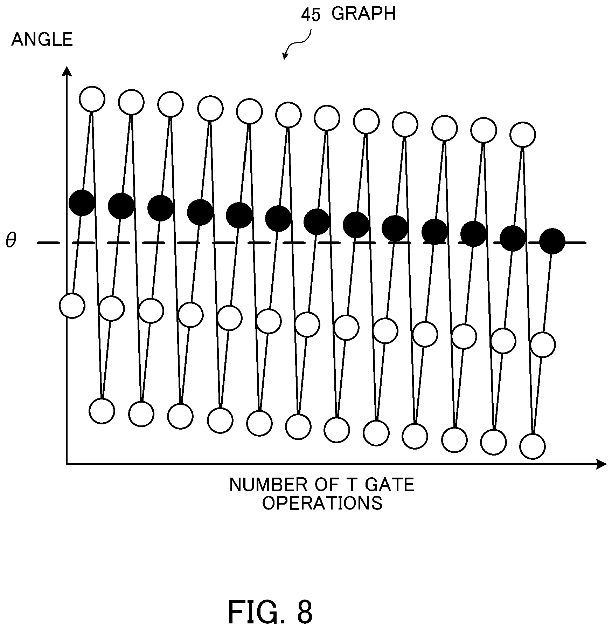

FIG. 8 illustrates an example of a rotation to an arbitrary rotation angle by using a T gate. In a graph 45, the horizontal axis represents the number of T gate operations, and the vertical axis represents an angle. θ represents the target angle. An individual circle on a broken line in the graph 45 represents the angle obtained after a single rotation with the rotation angle φ (irrational multiple of 2π). The T gate operation for the rotation with the rotation angle φ is repeated such that the angle represented by a black circle reaches the target angle. It is known that the T gate operation needs to be repeated approximately 100 times to realize a Z-axis rotation with a π/128 degree with approximately an accuracy of 10⁻¹⁰ by using an arbitrary-rotation T gate decomposition method (V. Kliuchnikov, D. Maslov and M. Mosca, "Practical Approximation of Single-Qubit Unitaries by Single-Qubit Quantum Clifford and T Circuits," in IEEE Transactions on Computers, vol. 65, no. 1, pp. 161-172, 1 Jan. 2016), which is the most effective method currently known.

As described above, an arbitrary rotation angle is realized by repeating the T gate operation. To execute these gate operations based on a T gate on logical qubits, ancilla qubits in a magic state need to be prepared as described above.

To generate an accurate magic state, a gate operation of inputting some noisy magic states to a predetermined quantum circuit and extracting a state without an error is executed. This gate operation is called "magic state distillation". For example, when 15-to-1 distillation is executed, 15 logical qubits are used to generate a single magic state. When a single logical qubit is encoded by 100 physical qubits, 1500 physical qubits are consumed.

The accuracy of the T gate depends on the accuracy of the magic state. Thus, to improve the accuracy of the T gate, the number of magic states inputted to the magic state distillation is increased. As a result, the number of physical qubits used for the T gate operation approximates 1000 to 10000. If this operation is executed by a quantum computer with a scale of 10000 physical qubits, all the resources are consumed by the magic state distillation, and consequently, the quantum computation itself becomes inexecutable. Thus, it is important to establish a method for executing quantum computation that maintains fault tolerance as much as possible with a limited number of physical qubits.

As already mentioned, there are known techniques for reducing the number of physical qubits used in an FTQC (Yasunari Suzuki, Suguru Endo, Keisuke Fujii and Yuuki Tokunaga, "Quantum Error Mitigation as a Universal Error Reduction Technique: Applications from the NISQ to the Fault-Tolerant Quantum Computing Eras", PRX QUANTUM 3, 010345(2022), the American Physical Society, 18 March 2022; and Christophe Piveteau, David Sutter, Sergey Bravyi, Jay M. Gambetta, and Kristan Temme, "Error Mitigation for Universal Gates on Encoded Qubits", PHYSICAL REVIEW LETTERS, Volume 127, Issue 20, 12 November 2021 (hereinafter, "Piveteau")). Although these techniques succeed in reducing the number of physical qubits, an enormous number of inaccurate T gates are used to execute gate operations for an arbitrary rotation. Thus, many errors are accumulated. Therefore, the accuracy of the T gate needs to be improved.

For example, there is a technique disclosed in the above Ying Li, "A magic state's fidelity can be superior to the operations that created it" New Journal of Physics, Volume 17, 13 February 2015 (hereinafter, "Li"), as the technique for improving the accuracy of the T gate, that is, the technique for improving the accuracy in preparing the magic state. According to this technique, an unencoded magic state is first prepared and is next encoded. Assuming that any operation results in an error with a probability p, a magic state error rate P_{L} according to "Li" is "P_{L} ≈ 46p/15". In the above "Piveteau", a magic state is prepared by temporary unencoding the logical qubit. A magic state error rate P_{L} according to "Piveteau" is "P_{L} ≈ 30p".

As described above, according to "Li" and "Piveteau", a state that is not encoded is partly used, and an error that occurs in the state that is not encoded deteriorates the accuracy of the magic state. This deterioration of the accuracy of the magic state results in deterioration of the accuracy of the T gate. As a result, the accuracy of the gate operation for an arbitrary rotation becomes insufficient. Thus, it is hard to say that the techniques proposed by "Li" and "Piveteau" are sufficiently practical.

As described above, the T gate operation is repeated many times for an arbitrary rotation, and it is difficult to execute the T gate operation accurately with the current number of physical qubits. As a result, the accuracy of the gate operation for an arbitrary rotation is insufficient.

To solve this problem, the quantum computation system 30 according to the second embodiment realizes the gate operation for an arbitrary rotation without using a T gate. Specifically, when executing quantum computation, the quantum computation system 30 directly executes an arbitrary rotation, without using a T gate (Clifford + rotation). In this operation, the quantum computation system 30 realizes an accurate rotation by efficiently executing a preparation process for an ancilla state used for an arbitrary rotation.

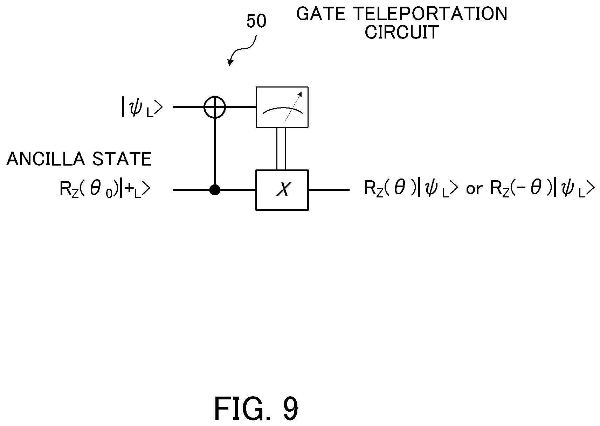

FIG. 9 illustrates an example of a quantum circuit for executing a gate operation for an arbitrary rotation. A gate teleportation circuit 50 is a quantum circuit that realizes a rotation (R_{Z}(θ)) with an angle θ. In the gate teleportation circuit 50, an operation target state |ψ> is inputted to the first qubit, and an ancilla state "R_{Z}(θ)|+_{L}>" is inputted to the second qubit.

In the gate teleportation circuit 50, first, the gate operation of a CNOT gate that uses the second qubit as the control qubit and uses the first qubit as the target qubit is executed. If the result of the measurement of the first qubit represents "+1", the gate operation of an X gate is executed on the second qubit.

If the result of the measurement of the first qubit represents "+1", the state of the second qubit represents "R_{Z}(θ)|ψ>". If the result of the measurement of the first qubit represents "0", the state of the second qubit represents "R_{Z}(-θ)|ψ>". In this way, after the gate operation for an arbitrary rotation executed by the gate teleportation circuit 50, "R_{Z}(θ)|ψ>" or "R_{Z}(-θ)|ψ>" is obtained. That is, the output state could stochastically represent the inverse rotation. The probability that the output state represents "R_{Z}(θ)|ψ>" and the probability that the output state represents "R_{Z}(-θ)|ψ>" are each "1/2".

Because the output state of the gate teleportation circuit 50 stochastically results in the target rotation (forward rotation) or the inverse rotation, the quantum computation system 30 repeats the same gate operation until the output state results in the target rotation.

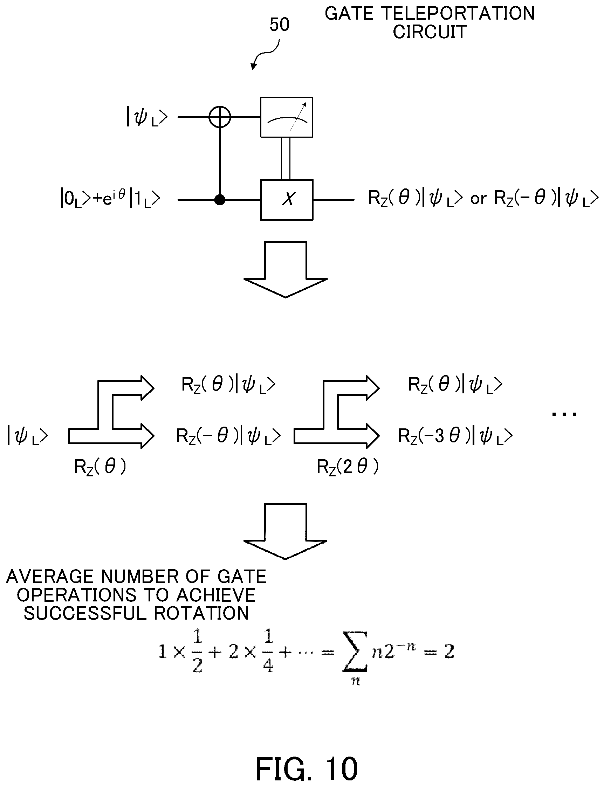

FIG. 10 illustrates an example of repetition executed until the target rotation angle is obtained. For example, if a gate operation for a rotation to the target angle θ fails and results in the inverse rotation (-θ), the quantum computation system 30 executes a rotation with an angle 2θ in the gate operation for the next rotation. If the gate operation for the rotation with the angle 2θ also fails and results in the inverse rotation (-2θ), a sum of the two rotation angles represents -3θ. In this case, the quantum computation system 30 executes, for example, a rotation with an angle 4θ in the gate operation for the next rotation.

Assuming that the probability that a rotation succeeds and the probability that a rotation fails are each 1/2, an average number of rotation operations to obtain a successful rotation is "1 × (1/2) + 2 × (1/4) + ... = Σₙn2⁻ⁿ = 2". That is, the quantum computation system 30 is able to achieve an arbitrary rotation by executing the gate operation of the gate teleportation circuit 50 twice on average.

The quantum computation system 30 is able to always maintain the rotation angle in a range [-π,π) by executing a process in which the rotation angle has a 2π periodicity. For example, a rotation to a target angle θ will be considered. The quantum computation system 30 sets the remainder obtained by dividing θ by 2π to θ' (θ' = θ - 2πn) (n is an integer). In this case, θ'∈[0,2π).

After the following determination processes 1 and 2 on θ', the quantum computation system 30 determines the rotation angle of the next rotation operation in process 3.
1. If 0 ≤ θ' <π, θ" = θ'.
2. If π < θ' ≤ 2π, θ" = θ' - 2π.
3. θ" is used as the final rotation angle (θ" ∈ [-π,π)).

While repeating the arbitrary rotation, the quantum computation system 30 executes processes 1 to 3, such that the rotation has the smallest possible absolute value. As a result, because the rotation angle will not be excessively large, error expansion is prevented.

By using the gate teleportation circuit 50 as described above, no magic state needs to be used for the arbitrary rotation. The gate teleportation circuit 50 uses an ancilla state, instead of a magic state. Thus, an ancilla state is prepared before execution of the gate teleportation in the gate teleportation circuit 50. The accuracy of the prepared ancilla state affects the overall accuracy of the arbitrary rotation.

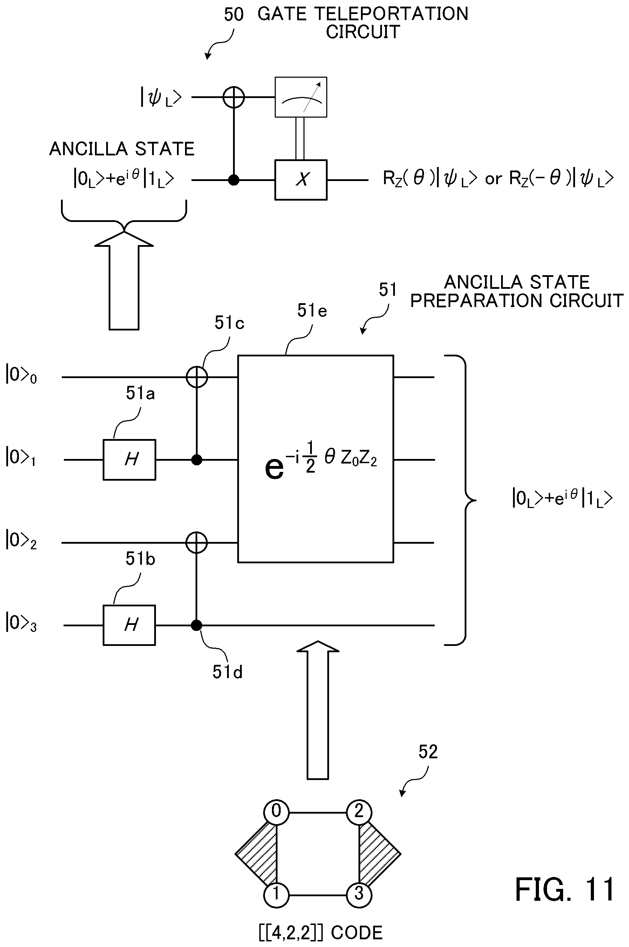

FIG. 11 illustrates an example of a quantum circuit for preparing an ancilla state. The ancilla state inputted to the gate teleportation circuit 50 is generable by using an error-correcting code called "[[4,2,2]] code 52". The [[4,2,2]] code 52 represents that four physical qubits are used to represent the state of two qubits and that the code distance is "2".

The input states of the four physical qubits in an ancilla state preparation circuit 51 are each |0>. In the ancilla state preparation circuit 51, first, among the four physical qubits, the gate operations of Hadamard gates 51a and 51b are executed on the second and fourth physical qubits. Next, the gate operation of a CNOT gate 51c using the second physical qubit as the control qubit and the first physical qubit as the target qubit is executed. Simultaneously, the gate operation of a CNOT gate 51d using the fourth physical qubit as the control qubit and the third physical qubit as the target qubit is executed. Next, a 2-qubit rotation gate 51e around the z axis "e^{-i(1/2)θZ0Z2}" (a number immediately after a Z is the subscript of the Z) is executed on the first physical qubit and the third physical qubit.

The gate operation executed by the 2-qubit rotation gate 51e is expressed by equation (5). ${R}_{ZZ} \left(θ\right) = exp \left(-i\frac{θ}{2}ZZ\right) = \left(\begin{matrix}{e}^{- i \frac{θ}{2}} & 0 & 0 & 0 \\ 0 & {e}^{i \frac{θ}{2}} & 0 & 0 \\ 0 & 0 & {e}^{i \frac{θ}{2}} & 0 \\ 0 & 0 & 0 & {e}^{- i \frac{θ}{2}}\end{matrix}\right)$ (5)

Because the rotation gate 51e expressed by equation (5) is a rotation gate executed on physical qubits that are not encoded, the rotation gate 51e is easily executable by the quantum computer 200. For example, if the quantum computer 200 is an ion-trap quantum computer, the rotation gate 51e is executable without change by using an XX rotation gate R_{XX}(θ) and an H gate. If the quantum computer 200 is a superconducting quantum computer, the rotation gate 51e is executable without change by using, for example, a cross-resonance gate R_{ZX}(θ) and an H gate. Even if these are not usable, the rotation gate 51e is executable by combining a CNOT gate and an RZ gate (R_{Z}(θ)). The output of the ancilla state preparation circuit 51 is used as the encoded ancilla state "R_{Z}(θ)|+_{L}>".

When the gate teleportation circuit 50 and the ancilla state preparation circuit 51 are used, an encoded ancilla state is generated from the [[4,2,2]] code 52, and an encoded gate operation for an arbitrary rotation is executed in the encoded state. In this way, an arbitrary rotation is realized without canceling the encoding. If the encoding is canceled, the error rate is increased. However, the above operation prevents this increase in error rate.

The code distance of the ancilla state generated from the [[4,2,2]] code 52 is "2". However, the ancilla state used as input of the gate teleportation circuit 50 that realizes an arbitrary rotation needs to be encoded by a code distance applied to the gate teleportation circuit 50. Thus, in the quantum computation system 30, the ancilla state generated from the [[4,2,2]] code 52 is expanded to a surface code having a target code distance d.

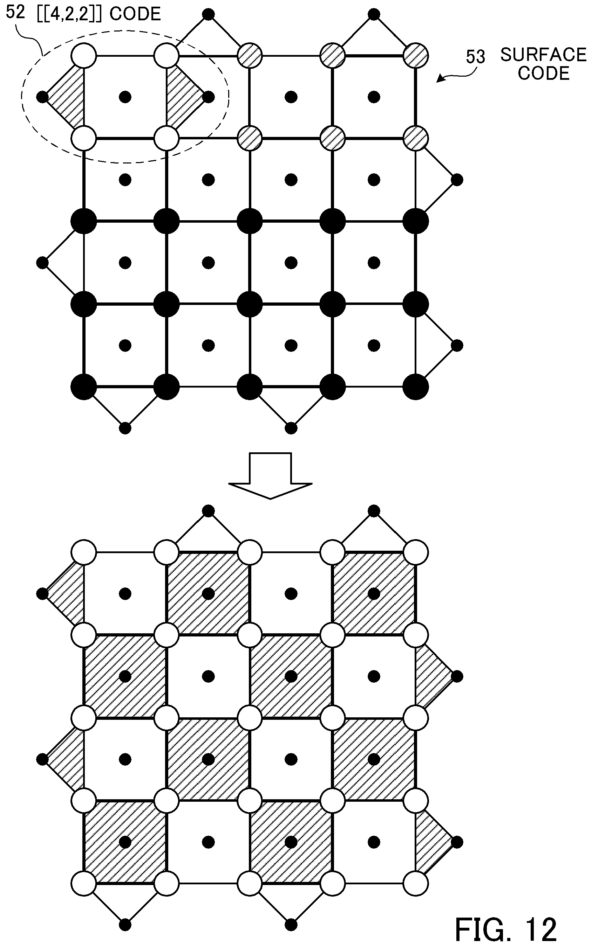

FIG. 12 illustrates an example of expansion to a surface code. A surface code 53 is an expansion of the [[4,2,2]] code 52 to a code distance "5" (d = 5). In the top left corner of the surface code 53, the state prepared with the [[4,2,2]] code 52 is set. The other physical qubits are each initialized to |0> or |+>. In the surface code 53, the hatched circles represent the physical qubits initialized to |0>, and the black circles represent the physical qubits initialized to |+>.

In the quantum computation system 30, syndrome measurement is executed on the whole surface code 53. The Z stabilizers of the surface code 53 are the lattice surfaces in the hatched areas, and the X stabilizers are the lattice surfaces in the white areas.

In the quantum computation system 30, error detection is executed based on the syndrome measurement result. If an error is detected, the generated ancilla state is discarded, and the process for generating an ancilla state is executed again. In this way, it is possible to generate ancilla states with the fewest errors possible.

Next, the syndrome measurement will be described.

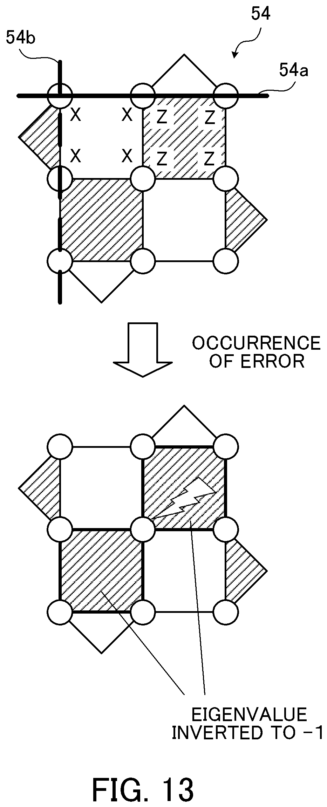

FIG. 13 illustrates an example of error detection based on the syndrome measurement. The logical qubits of a surface code 54 are each in a simultaneous eigenstate having an eigenvalue +1 of a stabilizer operator defined in a lattice surface. The surface code 54 has one logical degree of freedom (9 qubits - 8 stabilizers).

The logical Z operators are defined on a border indicated by a solid thick line 54a. The logical X operators are defined on a border indicated by a dashed thick line 54b. Three qubits are located on the line indicating the logical Z operators. Similarly, three qubits are located on the line indicating the logical X operators. That is, the code distance is "3".

An error that occurs in a physical qubit included in the surface code 54 is detectable by measuring the eigenvalues of the stabilizer operators. The eigenvalues of the stabilizers are called "syndrome". Measurement of the eigenvalues are called "syndrome measurement". If there is no error, all the syndrome values represent +1.

If an error occurs in any one of the physical qubits, the eigenvalues of the stabilizers around this physical qubit are inverted. For example, if an X error occurs in the center physical qubit, the eigenvalues of the two Z stabilizers sandwiching this error qubit are inverted to "-1".

The syndrome measurement is executed by using ancilla qubits.

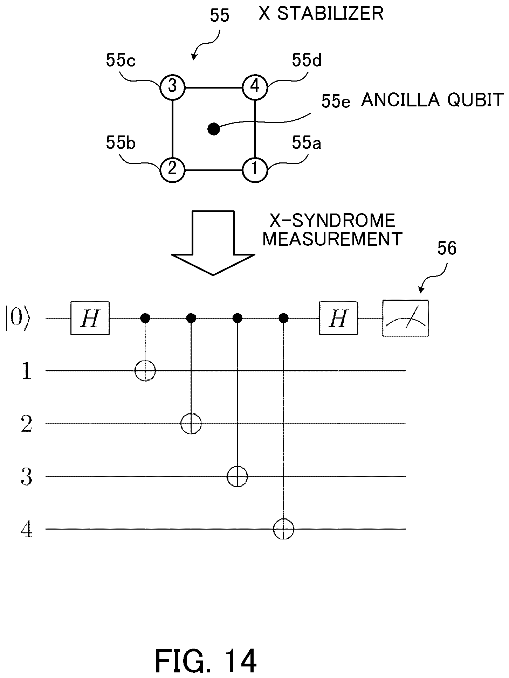

FIG. 14 illustrates an example of X-syndrome measurement. Physical qubits 55a to 55d included in an X stabilizer 55 and an ancilla qubit 55e on which a CNOT gate operation is executable with each of these physical qubits 55a to 55d are used. A quantum circuit 56 for X-syndrome measurement receives |0> as the initial state of the ancilla qubit 55e. The gate operation of a Hadamard gate is executed on the ancilla qubit 55e.

Next, the gate operations of four CNOT gates are sequentially executed by using the ancilla qubit 55e as the control qubit and by using each of the physical qubits 55a to 55d as the target qubit. The numbers allocated to the physical qubits 55a to 55d represent the order in which the operations of the CNOT gates are executed. Next, the gate operation of a Hadamard gate is executed on the ancilla qubit 55e. Finally, the state of the ancilla qubit 55e is measured.

If an X error occurs in any one of the physical qubits 55a to 55d, the state of the ancilla qubit 55e is inverted in accordance with the quantum circuit 56.

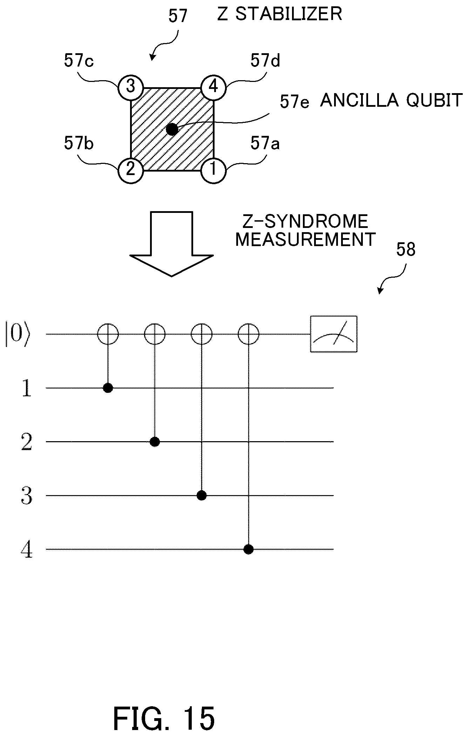

FIG. 15 illustrates an example of Z-syndrome measurement. Physical qubits 57a to 57d included in a Z stabilizer 57 and an ancilla qubit 57e on which a CNOT gate operation is executable with each of these physical qubits 57a to 57d are used. A quantum circuit 58 for Z-syndrome measurement receives |0> as the initial state of the ancilla qubit 57e. Next, the gate operations of four CNOT gates are sequentially executed by using the ancilla qubit 57e as the target qubit and by using each of the physical qubits 57a to 57d as the control qubit. The numbers allocated to the physical qubits 57a to 57d represent the order in which the operations of the CNOT gates are executed. Finally, the state of the ancilla qubit 57e is measured.

If a Z error occurs in any one of the physical qubits 57a to 57d, the state of the ancilla qubit 57e is inverted in accordance with the quantum circuit 58.

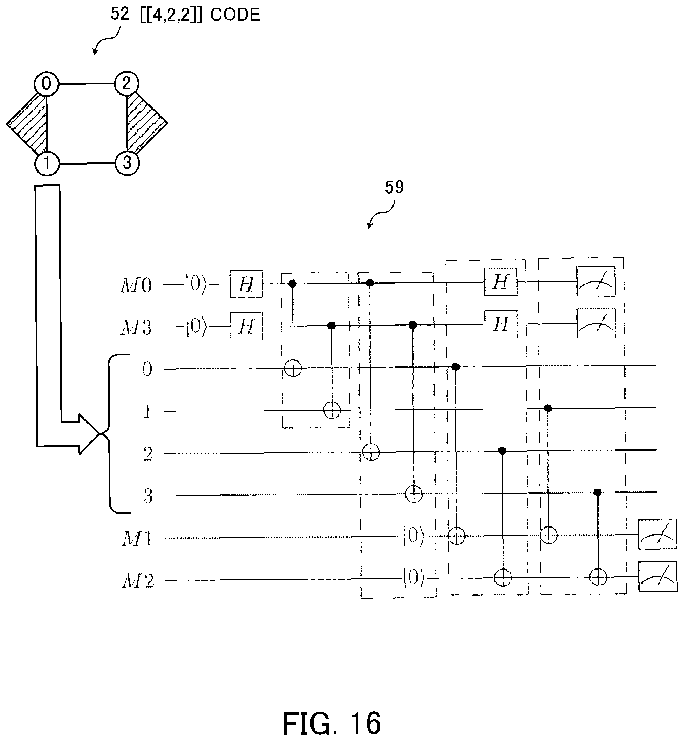

FIG. 16 illustrates an example of a quantum circuit for detecting an error of the [[4,2,2]] code. A quantum circuit 59 is able to detect an error of the [[4,2,2]] code 52. The quantum circuit 59 uses four physical qubits (M0 to M3) in addition to the four physical qubits (identification numbers 0 to 3) included in the [[4,2,2]] code 52.

The stabilizer operators of the [[4,2,2]] code 52 are X₀X₁X₂X₃ and Z₀Z₁Z₂Z₃. The physical qubits M0 to M3 are ancilla qubits used for the syndrome measurement. In the quantum circuit 59, the quantum gates surrounded by a rectangular dashed line are executed simultaneously. By executing the quantum circuit 59, the eigenvalues (syndromes) of the two stabilizer operators are obtained. Whether there is an error is determined based on the acquired syndromes.

The quantum computation system 30 accurately detects an error of the [[4,2,2]] code 52 based on the quantum circuit 59. Upon detecting an error, the quantum computation system 30 executes the process for generating an ancilla state again. In this way, the quantum computation system 30 is able to generate accurate ancilla states without generating unnecessary errors.

The ancilla state error rate is expressed as "2p/15" by using a physical qubit error rate p. This ancilla state error rate is sufficiently less than the magic state error rate 46p/15 according to "Li" and the magic state error rate 30p according to "Piveteau". That is, it is possible to generate the ancilla state "R_{Z}(θ)|+_{L}>" more accurately than these magic states. Since ancilla states are generated accurately, accurate arbitrary rotations are realized by the gate teleportation circuit 50 (see FIG. 9) using these accurate ancilla states.

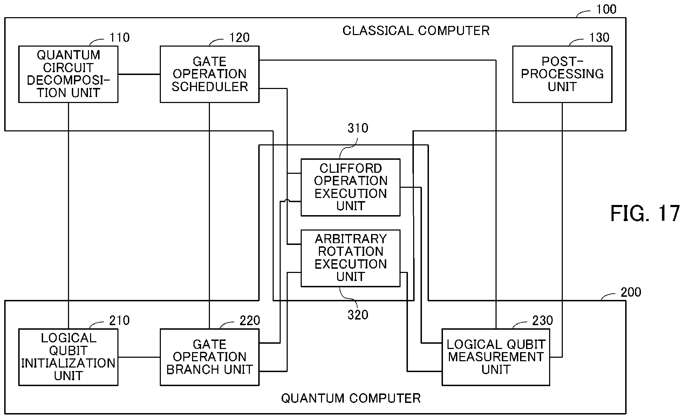

FIG. 17 is a block diagram illustrating an example of functions of the quantum computation system. The classical computer 100 includes a quantum circuit decomposition unit 110, a gate operation scheduler 120, and a post-processing unit 130. The quantum computer 200 includes a logical qubit initialization unit 210, a gate operation branch unit 220, and a logical qubit measurement unit 230. In addition, the quantum computation system includes a Clifford operation execution unit 310 and an arbitrary rotation execution unit 320, as the functions realized by causing the classical computer 100 and the quantum computer 200 to operate in coordination with each other.

The quantum circuit decomposition unit 110 decomposes a quantum circuit for solving a target problem into basic gates (Clifford gates or arbitrary rotation gates). The gate operation scheduler 120 manages the order of the gate operations. The post-processing unit 130 executes a predetermined arithmetic process on a qubit measurement result. The logical qubit initialization unit 210 initializes the logical qubits. The gate operation branch unit 220 instructs the Clifford operation execution unit 310 or the arbitrary rotation execution unit 320 to perform execution of a gate operation, depending on whether the gate operation to be executed next is a Clifford operation or an arbitrary rotation. The logical qubit measurement unit 230 measures the state of the logical qubits. The Clifford operation execution unit 310 executes a gate operation corresponding to a Clifford operation on the logical qubits. The arbitrary rotation execution unit 320 executes a gate operation corresponding to an arbitrary rotation on the logical qubits.

The lines connecting various functions illustrated in FIG. 17 indicate part of the communication paths, and communication paths other than those illustrated in FIG. 17 may also be set. The individual functions realized by the classical computer 100 may be realized, for example, by causing the processor 101 to execute program modules corresponding to the functions.

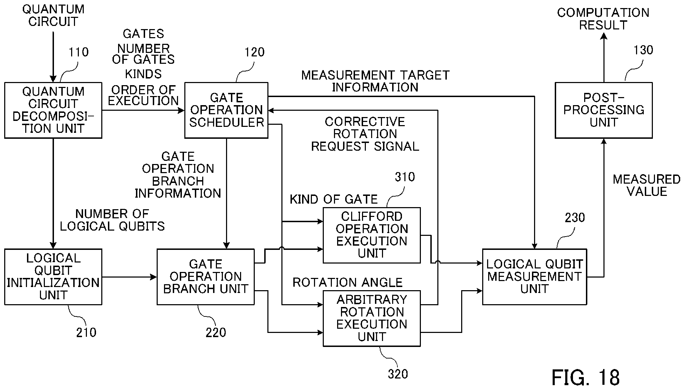

FIG. 18 illustrates data flow among the functions. The quantum circuit decomposition unit 110 acquires a quantum circuit from the terminal 31, for example. After decomposing the acquired quantum circuit into basic gates, the quantum circuit decomposition unit 110 transmits, for example, information about the resultant gates, the number of gates, the kinds of the gates, and the order in which these gates are executed to the gate operation scheduler 120. In addition, the quantum circuit decomposition unit 110 transmits the number of logical qubits used for the quantum computation to the logical qubit initialization unit 210. The logical qubit initialization unit 210 initializes the states of the logical qubits and notifies the gate operation branch unit 220 of completion of the initialization.

The gate operation scheduler 120 manages the order in which the basic gates are executed and transmits gate operation branch information indicating whether the quantum gate to be executed next is a Clifford operation or an arbitrary rotation to the gate operation branch unit 220. If the quantum gate to be executed next is a Clifford operation, the gate operation scheduler 120 transmits information indicating the kind of the gate to the Clifford operation execution unit 310. If the quantum gate to be executed next is an arbitrary rotation, the gate operation scheduler 120 transmits information indicating a rotation angle to the arbitrary rotation execution unit 320. In addition, the gate operation scheduler 120 transmits measurement target information indicating a logical qubit to be measured after the gate operation to the logical qubit measurement unit 230.

If the quantum gate to be executed next is a Clifford gate, the gate operation branch unit 220 instructs the Clifford operation execution unit 310 to execute a gate operation. In addition, If the quantum gate to be executed next is an arbitrary rotation, the gate operation branch unit 220 instructs the arbitrary rotation execution unit 320 to execute a gate operation.

In response to the instruction to execute a gate operation, the Clifford operation execution unit 310 executes the gate operation of a corresponding quantum gate, which is a Clifford operation, and transmits information indicating completion of the gate operation to the logical qubit measurement unit 230. If the arbitrary rotation execution unit 320 executes the gate operation of the arbitrary rotation in response to the instruction to execute the gate operation and succeeds in the rotation to the target angle, the arbitrary rotation execution unit 320 transmits information indicating completion of the gate operation to the logical qubit measurement unit 230. If the gate operation of the rotation results in the inverse rotation, the arbitrary rotation execution unit 320 transmits a corrective rotation request signal to the gate operation scheduler 120. In response to the corrective rotation request signal, the gate operation scheduler 120 computes a new rotation angle and transmits the computed rotation angle to the arbitrary rotation execution unit 320.

Upon completion of the gate operation, the logical qubit measurement unit 230 measures the state of the measurement target logical qubit. Next, the logical qubit measurement unit 230 transmits the measured value to the post-processing unit 130. The post-processing unit 130 executes a predetermined arithmetic process on the measured value and outputs the resultant value as a computation result.

Next, functions of the Clifford operation execution unit 310 will be described in detail.

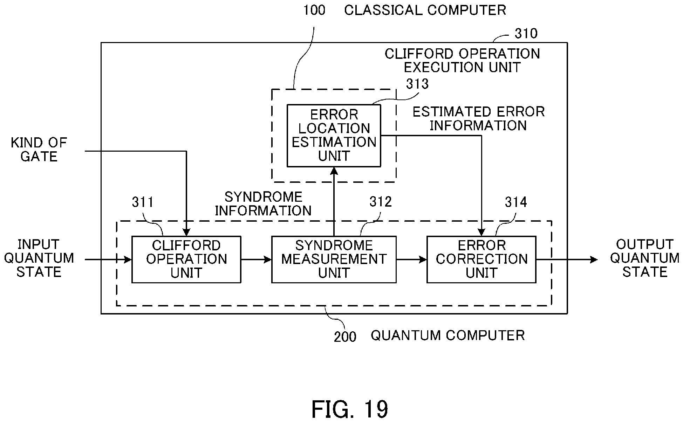

FIG. 19 is a block diagram illustrating an example of functions of the Clifford operation execution unit. The Clifford operation execution unit 310 includes a Clifford operation unit 311, a syndrome measurement unit 312, an error location estimation unit 313, and an error correction unit 314. Among these functions, the error location estimation unit 313 is a function realized by the classical computer 100. In addition, the Clifford operation unit 311, the syndrome measurement unit 312, and the error correction unit 314 are functions realized by the quantum computer 200.

Based on the kind of a gate and the input quantum state of a gate operation target qubit, the Clifford operation unit 311 executes the gate operation of a Clifford operation on the logical qubit. The input quantum state is the state of the logical qubit at the time when the instruction for the gate operation is inputted.

The syndrome measurement unit 312 measures the syndrome of the logical qubit on which the gate operation has been executed. The syndrome measurement unit 312 transmits syndrome information indicating the measurement result to the error location estimation unit 313. The error location estimation unit 313 estimates an error location based on the syndrome information. The error location estimation unit 313 transmits estimated error information indicating the error location estimation result to the error correction unit 314. The error correction unit 314 recognizes presence or absence of an error based on the estimated error information. If there is an error, the error correction unit 314 executes a gate operation for correcting the state of the physical qubit at the error location. The error correction unit 314 notifies the logical qubit measurement unit 230 of completion of the gate operation by using the corrected state of the logical qubit as an output quantum state.

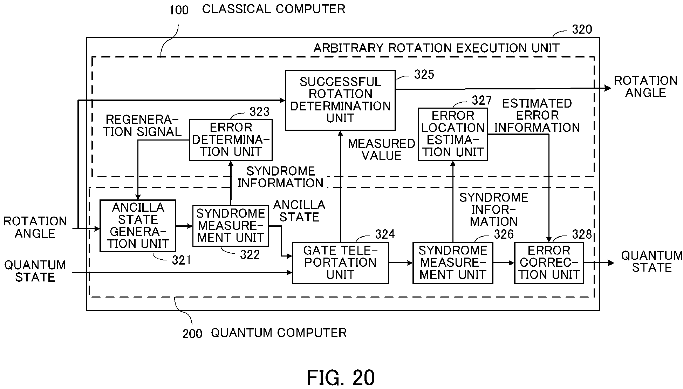

FIG. 20 is a block diagram illustrating an example of functions of the arbitrary rotation execution unit. The arbitrary rotation execution unit 320 includes an ancilla state generation unit 321, a syndrome measurement unit 322, an error determination unit 323, a gate teleportation unit 324, a successful rotation determination unit 325, a syndrome measurement unit 326, an error location estimation unit 327, and an error correction unit 328. Among these functions, the error determination unit 323, the successful rotation determination unit 325, and the error location estimation unit 327 are realized by the classical computer 100. In addition, the ancilla state generation unit 321, the syndrome measurement unit 322, the gate teleportation unit 324, the syndrome measurement unit 326, and the error correction unit 328 are realized by the quantum computer 200.

Upon acquiring information about a rotation angle, the ancilla state generation unit 321 generates an ancilla state for executing a rotation to the rotation angle. The ancilla state generation unit 321 notifies the syndrome measurement unit 322 of information indicating the logical qubit in the ancilla state. The syndrome measurement unit 322 measures the syndrome of the ancilla state. The syndrome measurement unit 322 transmits information about the measured syndrome to the error determination unit 323.

The error determination unit 323 determines presence or absence of an error based on the measured syndrome. If the error determination unit 323 determines that there is an error, the error determination unit 323 transmits an ancilla state regeneration signal to the ancilla state generation unit 321. Upon receiving the ancilla state regeneration signal, the ancilla state generation unit 321 generates an ancilla state again.

If the error determination unit 323 determines that there is no error, the syndrome measurement unit 322 transmits information about the logical quantum circuit in the ancilla state to the gate teleportation unit 324.

The gate teleportation unit 324 executes a rotation operation based on a gate teleportation circuit using the ancilla state. The gate teleportation unit 324 transmits a measured value obtained by the measurement executed in the process of the execution of the gate teleportation circuit (the gate teleportation circuit 50 in FIG. 9) to the successful rotation determination unit 325. Based on the measured value, the successful rotation determination unit 325 determines whether the rotation to the specified rotation angle has succeeded. If the rotation has failed, the successful rotation determination unit 325 transmits the corrective rotation request signal to the gate operation scheduler 120.
If the successful rotation determination unit 325 determines that the rotation has succeeded, the gate teleportation unit 324 notifies the syndrome measurement unit 326 of completion of the rotation operation. The syndrome measurement unit 326 measures the syndrome of the rotated logical qubit. The syndrome measurement unit 326 transmits information about the measured syndrome to the error location estimation unit 327.

Based on the measured syndrome, the error location estimation unit 327 determines presence or absence of an error. The error location estimation unit 327 transmits estimated error information indicating an error location estimation result to the error correction unit 328. Based on the estimated error information, the error correction unit 328 recognizes presence or absence of an error. If there is an error, the error correction unit 328 executes a gate operation for correcting the state of the physical qubit at the error location. The error correction unit 328 notifies the logical qubit measurement unit 230 of completion of the gate operation by using the corrected state of the logical qubit as an output quantum state.
Next, a procedure of a quantum computation process will be described with reference to a flowchart.

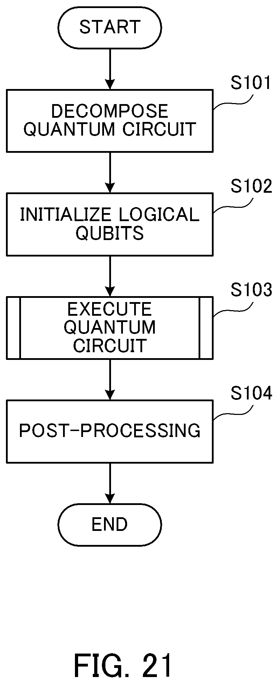

FIG. 21 is a flowchart illustrating an example of a procedure of a quantum computation process. Hereinafter, the process illustrated in FIG. 21 will be described in accordance with step numbers.

[Step S101] Upon receiving a quantum circuit to be executed, the quantum circuit decomposition unit 110 in the classical computer 100 decomposes the quantum gates in the quantum circuit into basic gates (Clifford gates or arbitrary rotation gates). The quantum circuit decomposition unit 110 sets the number of generated basic gates to N (N is a natural number).

[Step S102] The logical qubit initialization unit 210 in the quantum computer 200 initializes the states of the logical qubits.

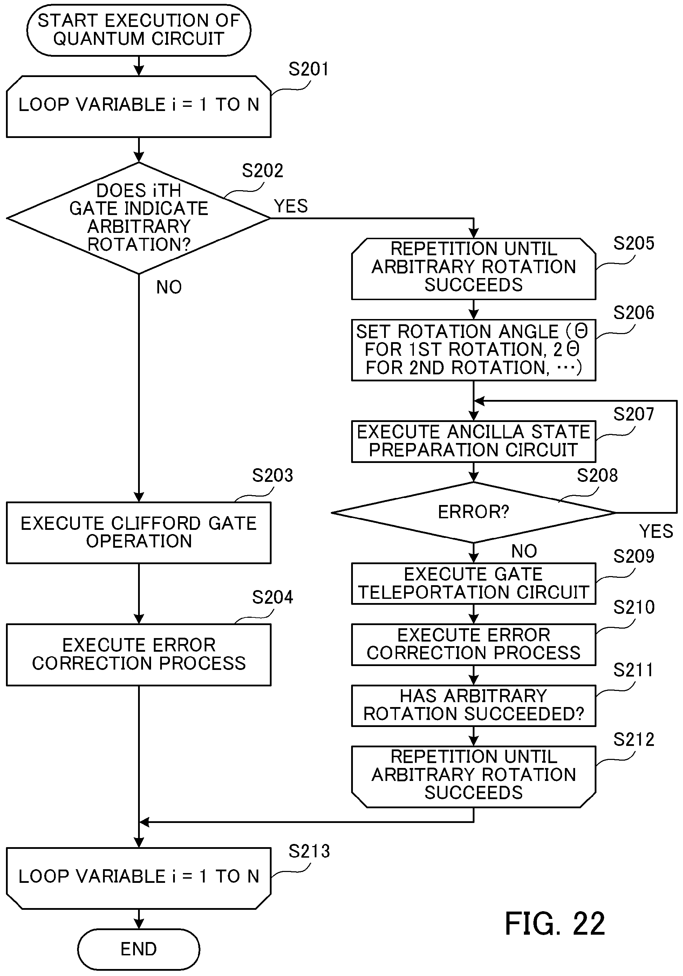

[Step S103] The classical computer 100 and the quantum computer 200 operate in coordination with each other to execute the quantum circuit. The quantum circuit execution process will be described in detail below (see FIG. 22).

[Step S104] The post-processing unit 130 in the classical computer 100 executes a predetermined arithmetic process on a measured value obtained by the quantum computer 200 and outputs a computation result.

Next, the quantum circuit execution process will be described below.

FIG. 22 is a flowchart illustrating an example of a procedure of the quantum circuit execution process. Hereinafter, the process illustrated in FIG. 22 will be described in accordance with the step numbers.

[Step S201] The gate operation scheduler 120 repeats steps S202 to S212 until a loop variable i reaches N while counting up the loop variable i from 1.

[Step S202] The gate operation scheduler 120 determines whether the ith gate is a quantum gate for an arbitrary rotation or a Clifford gate. If the ith gate is a quantum gate for an arbitrary rotation, the process proceeds to step S205. If the ith gate is a Clifford gate, the process proceeds to step S203.

[Step S203] The gate operation scheduler 120 causes the quantum computer 200 to execute the Clifford gate operation. For example, the gate operation scheduler 120 transmits data operation branch information indicating that the next quantum gate is a Clifford operation to the gate operation branch unit 220. In addition, the gate operation scheduler 120 transmits information about the kind of the gate to be executed next to the Clifford operation execution unit 310. The gate operation branch unit 220 instructs the Clifford operation execution unit 310 to execute the gate operation. The Clifford operation execution unit 310 executes the gate operation of the Clifford gate on the logical qubit.

[Step S204] The Clifford operation execution unit 310 executes an error correction process. For example, the Clifford operation execution unit 310 measures the syndrome of the logical qubit and determines whether there is an error based on the syndrome. If there is an error, the Clifford operation execution unit 310 determines the error location. Upon detecting an error, the Clifford operation execution unit 310 executes a gate operation for correcting the error. Next, the process proceeds to step S213.

[Step S205] The gate operation scheduler 120 repeats step S206 to step S211 until the arbitrary rotation executed by using the quantum computer 200 succeeds. For example, the gate operation scheduler 120 transmits data operation branch information indicating that the next quantum gate is an arbitrary rotation to the gate operation branch unit 220. In addition, the gate operation scheduler 120 transmits a rotation angle to the arbitrary rotation execution unit 320. The gate operation branch unit 220 instructs the arbitrary rotation execution unit 320 to execute the gate operation.

[Step S206] The gate operation scheduler 120 sets the rotation angle to be executed. For example, the gate operation scheduler 120 sets the initial rotation angle to an angle θ specified by the ith quantum gate. In addition, the gate operation scheduler 120 sets the rotation angle used in the subsequent rotation to the angle twice the previous angle, for example.

[Step S207] The arbitrary rotation execution unit 320 executes the gate operation in accordance with the ancilla state preparation circuit. As a result of this gate operation, an ancilla state is generated.

[Step S208] The arbitrary rotation execution unit 320 determines whether there is an error in the ancilla state. If there is an error, the process proceeds to step S207, and an ancilla state is generated again. If there is no error, the process proceeds to step S209.

[Step S209] The arbitrary rotation execution unit 320 executes the gate process on the logical qubit in accordance with a gate teleportation circuit. In this step, the arbitrary rotation execution unit 320 determines whether the rotation has succeeded based on a measured value obtained in the process of executing the gate teleportation circuit. If the rotation has failed (if the rotation has resulted in the inverse rotation), the arbitrary rotation execution unit 320 outputs a corrective rotation request signal.

[Step S210] The arbitrary rotation execution unit 320 executes an error correction process. For example, the arbitrary rotation execution unit 320 measures the syndrome of the logical qubit and determines whether there is an error based on the syndrome. If there is an error, the arbitrary rotation execution unit 320 determines the error location. Upon detecting an error, the arbitrary rotation execution unit 320 executes a gate operation for correcting the error.

[Step S211] The arbitrary rotation execution unit 320 determines whether the arbitrary rotation has succeeded. For example, if the measured value obtained in the process of executing the gate teleportation circuit represents |1>, the arbitrary rotation execution unit 320 determines that the arbitrary rotation has succeeded. If the arbitrary rotation has failed, the arbitrary rotation execution unit 320 outputs a corrective rotation request signal.

[Step S212] If the arbitrary rotation has succeeded, the process proceeds to step S213. For example, unless a corrective rotation request signal is outputted from the arbitrary rotation execution unit 320, the gate operation scheduler 120 determines that the arbitrary rotation has succeeded.

[Step S213] If the value of the loop variable i reaches N, the gate operation scheduler 120 ends the quantum circuit execution process. If the value of the loop variable i is less than N, the gate operation scheduler 120 increments N by 1 and repeats steps S202 to S212.

The above-described quantum computation achieves an arbitrary rotation without using a T gate and needs a fewer number of gate operations than the conventional techniques in which the T gate operation is repeated many times (for example, approximately 100 times). As a result, the quantum computation execution time is shortened, and the error accumulation is reduced. In addition, when an arbitrary rotation is executed, those gate operations using an enormous number of physical qubits as in the magic state distillation are not executed. That is, a fewer number of physical qubits are used. Although errors remain without the magic state distillation, the error rate is reduced by the state preparation method using the [[4,2,2]] code, and therefore, a practical accuracy is achieved. Although the above flowchart has been described assuming that the N gates are sequentially executed, sets of simultaneously executable gates may be executed in parallel.

Hereinafter, execution examples based on specific assumptions will be described.

Logical qubits are configured by using a rotation surface code (code distance d = 7, 9) (see Clare Horsman, Austin G Fowler, Simon Devitt, Rodney Van Meter, "Surface code quantum computing by lattice surgery", New Journal of Physics, 14(12), 123001(27pp), 7 December 2012). The number of usable physical qubits is 10000. An error occurrence model is modeled by a circuit level noise. The circuit level noise is a model in which an error occurs due to any kind of operation (initialization, gate operation, measurement). The circuit level noise is a model that is close to actual quantum computation. The following description also assumes that an error occurs with a probability of p = 10⁻⁴.

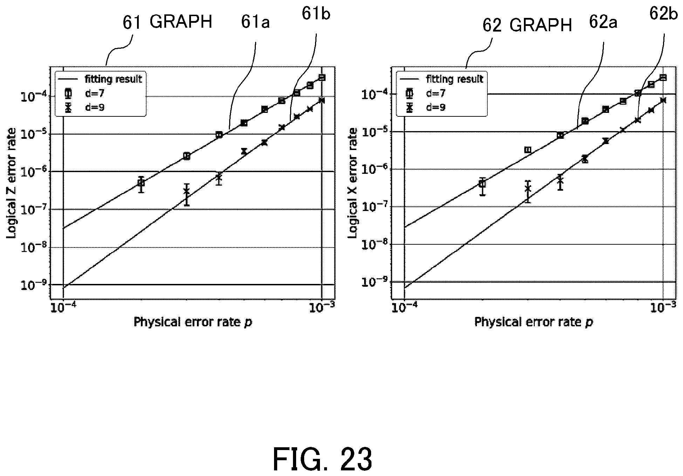

The scale of a quantum computation executable under these conditions will be described, and the results will be illustrated in FIG. 23.

FIG. 23 illustrates an example of numerical computation results indicating logical error rates. A graph 61 indicates the dependency (p dependency) of the logical Z error with respect to the physical error. The horizontal axis represents the physical error rate, and the vertical axis represents the logical Z error rate. A line 61a represents the p dependency when code distance d = 7, and a line 61b represents the p dependency when code distance d = 9.

A graph 62 indicates the p dependency of the logical X error. The horizontal axis represents the physical error rate, and the vertical axis represents the logical X error rate. A line 62a represents the p dependency when code distance d = 7, and a line 62b represents the p dependency when code distance d = 9.

The p dependency is obtained by equation (6). ${p}_{L , i} \left(p\right) = {C}_{i} {\left(\frac{p}{{p}_{th , i}}\right)}^{\frac{d + 1}{2}} \left(i=X,Z\right)$ (6)

Equation (6) includes Cᵢ and pₜₕ,ᵢ (i = X, Z), which are constants set based on Z and X errors. In the computation example illustrated in the graph 61 (when i = Z), "C_{Z} = 0.068" and "p_{th,Z} = 0.0039". In the computation example illustrated in the graph 62 (when i = X), "C_{X} = 0.082" and "p_{th,X} = 0.0042".

Assuming that p = 10⁻⁴, the overall logical error rate is p_{L} = p_{L,Z} + p__{L,X} (assuming that a logical Z error and a logical X error occur independently).

The logical error rate when p = 10⁻⁴ and code distance d = 7 is as follows.$p_L = 0.068 {\left(p/0.0039\right)}^{\left(7+1\right) / 2} + 0.082 {\left(p/0.0042\right)}^{\left(7+1\right) / 2} = 5.8 \times {10}^{- 8}$

The logical error rate when p = 10⁻⁴ and code distance d = 9 is as follows.$p_L = 0.068 {\left(p/0.0039\right)}^{\left(9+1\right) / 2} + 0.082 {\left(p/0.0042\right)}^{\left(9+1\right) / 2} = 1.5 \times \left.{10}^{- 9}\right)$

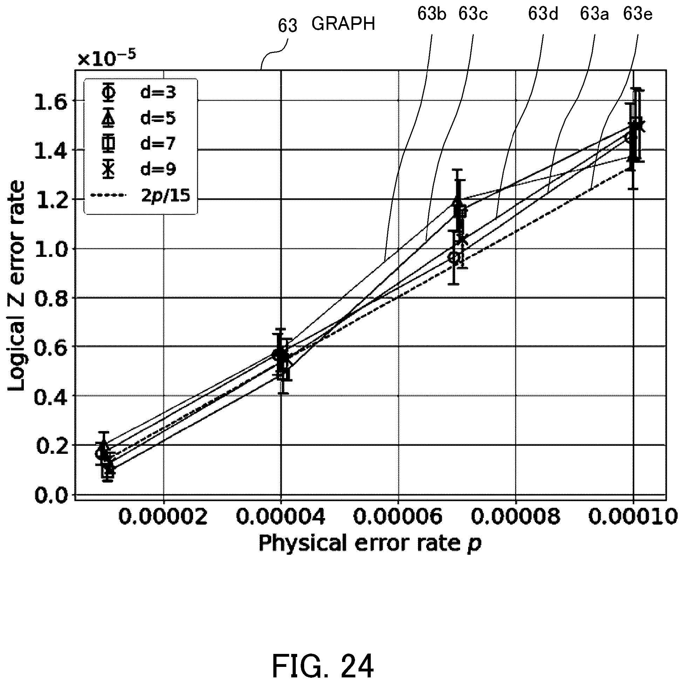

The results obtained by executing numerical computations about the rate of errors in preparing an ancilla state for an arbitrary rotation are illustrated in FIG. 24.

FIG. 24 illustrates an example of computation results indicating ancilla state error rates. A graph 63 represents the p dependencies of the ancilla state error rates. In the graph 63, the horizontal axis represents the physical error rate, and the vertical axis represents the ancilla state error rate. A line 63a represents the p dependency when code distance d = 3, a line 63b represents the p dependency when code distance d = 5, a line 63c represents the p dependency when code distance d = 7, and a line 63d represents the p dependency when code distance d = 9. A line 63e represents a case in which the ancilla state error rate is "2p/15".

As illustrated in the graph 63, the individual ancilla state error rate has a p dependency of approximately 2p/15. When p = 10⁻⁴, the ancilla state error rate is "2p/15 = 1.3 × 10⁻⁵".

Through these numerical computations, it is determined that the ancilla state error rates are sufficiently lower than the magic state error rates.

By suitably arranging the physical qubits constituting the logical qubits, it is possible to reduce the number of physical qubits used for inputting an ancilla state to the gate teleportation circuit 50.

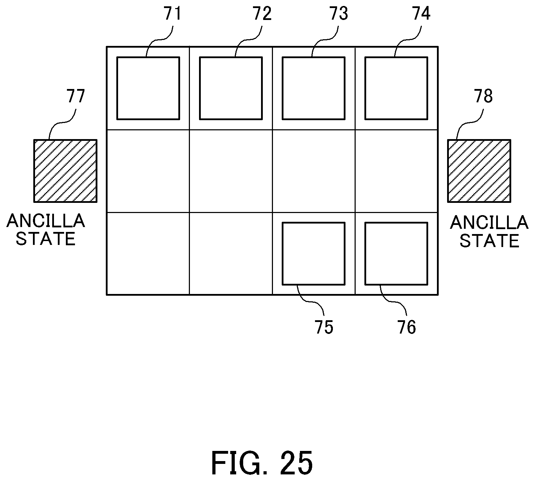

FIG. 25 illustrates an example of arrangement of logical qubits. In FIG. 25, logical qubits 71 to 78 are represented by rectangles. Each of the logical qubits 71 to 78 is a group of physical qubits used for encoding. The six logical qubits 71 to 76 in the middle are the logical qubits used as data on quantum computation. The two logical qubits 77 and 78 on the right and left sides are the logical qubits used for generating an ancilla state for an arbitrary rotation. The other areas are workspace for computation.

When an arbitrary rotation is executed on any one of the logical qubits 71 to 76, a gate operation is executed on one of the logical qubits 77 and 78 by the ancilla state preparation circuit 51, and consequently, an ancilla state is generated. Next, the logical qubit indicating the ancilla state and a logical qubit on which the arbitrary rotation is executed are inputted to the gate teleportation circuit 50. In this way, the gate operation for the arbitrary rotation is realized by executing the gate teleportation circuit 50.

With the arrangement illustrated in FIG. 25, when there are 10000 physical qubits and code distance d = 9, the number of logical qubits usable for the quantum computation is 37. When code distance d = 7, the number of logical qubits usable for the quantum computation is 64. For example, when code distance d = 9, "6.9 × 10⁸ times" of Clifford operations or "3.8 × 10⁴ times" of arbitrary rotations are executable on the 37 logical qubits. When code distance d = 7, "1.7 × 10⁷ times" of Clifford operations or "3.8 × 10⁴ times" of arbitrary rotations are executable on the 64 logical qubits. The computation executable when code distance d = 7 is difficult for a classical computer to simulate.

As described above, although approximately 100 times of gate operations need to be executed when Clifford + T is used, only two gate operations are executed on average according to the second embodiment. Thus, the unnecessary error accumulation is reduced, and the computation time is shortened. In addition, since no magic state distillation is executed when an arbitrary rotation is executed, the number of physical qubits used is reduced. In addition, since the number of errors in an arbitrary rotation is minimized by effectively preparing ancilla states, the number of executable arbitrary rotations is increased. As a result, for example, a device with a scale of 10000 qubits is able to compute quantum circuits that is not simulatable by a classical computer. That is, the quantum computation system 30 is able to achieve its maximum computation performance with a limited number of qubits.

### [Other Embodiment]

According to the second embodiment, the quantum computer 200 is used to execute quantum computation. However, when the scale of the problem is small or when the accuracy needed is low, a function of the quantum computer 200 may be replaced by a quantum simulation by the classical computer 100.

Although the second embodiment has been described based on an example in which the gate operation of a rotation gate for an arbitrary rotation R_{Z}(θ) is executed, it is possible to execute an arbitrary rotation around another rotation axis in the same way.

The above embodiments have been described as examples, and the configurations of the individual units according to the embodiments may be replaced by other configurations having equivalent functions. In addition, other components or processes may be added. Two or more configurations (features) in the above-described embodiments may be combined.

In one aspect, it is possible to shorten the computation time in fault-tolerant quantum computation.

Further preferred embodiments of the present invention are defined as E1 to E10 as follows:
E1. A computer program that causes a computer to execute a process comprising:
   setting, for a rotation (2) gate that is a quantum gate executed on an encoded logical qubit, a target rotation angle set in the rotation gate (2) to a designated rotation angle;
   generating a first logical qubit (4) having a predetermined ancilla state based on the designated rotation angle;
   executing a stochastic rotation operation that results in a forward rotation with the designated rotation angle or in an inverse rotation whose sign is opposite to a sign of the designated rotation angle by using, as input, the first logical qubit (4) and a second logical qubit (5) on which the rotation gate (2) is executed; and
   repeating a process for generating the first logical qubit (4) and a process for executing the rotation operation while updating the designated rotation angle based on the target rotation angle until the rotation operation results in the forward rotation.
E2. The computer program according to embodiment E1, wherein the process for generating the first logical qubit (4) includes generating the first logical qubit (4) having the ancilla state representing R_{Z}(θ)|+> when the designated rotation angle is θ (θ is a real number).
E3. The computer program according to embodiment E1, wherein the process for generating the first logical qubit (4) includes generating the first logical qubit (4) encoded by using a [[4,2,2]] code which represents a state of two logical qubits with four physical qubits and whose code distance is 2.
E4. The computer program according to embodiment E3, wherein the process for generating the first logical qubit includes expanding the code distance of the [[4,2,2]] code to a predetermined code distance, so as to generate the first logical qubit (4) having the predetermined code distance.
E5. The computer program according to embodiment E1, wherein the process for generating the first logical qubit (4) includes redoing the process for generating the first logical qubit having the ancilla state upon detecting an error about the ancilla state.
E6. The computer program according to embodiment E1, wherein the repeating of the process for generating the first logical qubit and the process for executing the rotation operation includes setting, when the rotation operation executed by using, as input, the first logical qubit generated by applying a first designated rotation angle results in the inverse rotation, an angle twice the first designated rotation angle as a second designated rotation angle applied to a next process for generating the first logical qubit.
E7. The computer program according to embodiment E6, wherein the repeating of the process for generating the first logical qubit and the process for executing the rotation operation includes setting, when a remainder obtained by dividing an angle twice the first designated rotation angle by 2π is 0 or greater and is less than π, an angle corresponding to the remainder as the second designated rotation angle, and setting, when the remainder is greater than π and is 2π or less, an angle obtained by subtracting 2π from the remainder as the second designated rotation angle.
E8. The computer program according to embodiment E1, wherein the rotation operation is a rotation operation in accordance with a gate teleportation circuit indicating a stochastic gate operation that results in the forward rotation or the inverse rotation.
E9. A quantum computation method executed by a computer, the quantum computation method comprising:
   setting, for a rotation gate (2) that is a quantum gate executed on an encoded logical qubit, a target rotation angle set in the rotation gate (2) to a designated rotation angle;
   generating a first logical qubit (4) having a predetermined ancilla state based on the designated rotation angle;
   executing a stochastic rotation operation that results in a forward rotation with the designated rotation angle or in an inverse rotation whose sign is opposite to a sign of the designated rotation angle by using, as input, the first logical qubit (4) and a second logical qubit (5) on which the rotation gate (2) is executed; and
   repeating a process for generating the first logical qubit (4) and a process for executing the rotation operation while updating the designated rotation angle based on the target rotation angle until the rotation operation results in the forward rotation.
E10. An information processing apparatus (10) comprising:
   processing means (12) for setting, for a rotation gate (2) that is a quantum gate executed on an encoded logical qubit, a target rotation angle set in the rotation gate (2) to a designated rotation angle, generating a first logical qubit (4) having a predetermined ancilla state based on the designated rotation angle, executing a stochastic rotation operation that results in a forward rotation with the designated rotation angle or in an inverse rotation whose sign is opposite to a sign of the designated rotation angle by using, as input, the first logical qubit (4) and a second logical qubit (5) on which the rotation gate (2) is executed, and repeating a process for generating the first logical qubit (4) and a process for executing the rotation operation while updating the designated rotation angle based on the target rotation angle until the rotation operation results in the forward rotation.

## Claims

1. A computer program that causes a computer to execute a process for performing a rotation operation on a first logical qubit (5) using an ancilla state preparation circuit including a rotation gate and a gate teleportation circuit (3), the process comprising:
setting, when a quantum gate to be applied to the first logical qubit (5) is a gate indicating the rotation operation, a target rotation angle set in the gate indicating the rotation operation to a designated rotation angle;
generating a first state encoded using a plurality of physical qubits used in the ancilla state preparation circuit;
generating a second logical qubit (4) having a predetermined ancilla state by applying, based on the designated rotation angle, the rotation gate to the encoded first state; and
executing the rotation operation by executing the gate teleportation circuit using the first logical qubit (5) and the second logical qubit (4) as input.

2. The computer program according to claim 1, wherein a process for generating the first state includes generating the first state by encoding the plurality of physical qubits according to a surface code scheme.

3. The computer program according to claim 1, wherein
the plurality of physical qubits are four physical qubits, and
a process for generating the first state includes generating the first state encoded using a [[4, 2, 2]] code which represents a state of two logical qubits with the four physical qubits and whose code distance is 2.

4. The computer program according to claim 1, wherein
a process for executing the rotation operation includes executing the rotation operation that stochastically results in a forward rotation with the designated rotation angle or an inverse rotation with a sign opposite to a sign of the designated rotation angle, and
a process for generating the second logical qubit and the process for executing the rotation operation are repeated while updating the designated rotation angle based on the target rotation angle until the rotation operation results in the forward rotation.

5. The computer program according to claim 1, wherein a process for generating the second logical qubit includes generating the second logical qubit having the ancilla state R_{Z}(θ)|>, wherein θ is the designated rotation angle and is a real number.

6. The computer program according to claim 3, wherein a process for generating the second logical qubit includes generating the second logical qubit having a predetermined code distance by expanding a code distance of the [[4, 2, 2]] code to the predetermined code distance.

7. The computer program according to claim 1, wherein a process for generating the second logical qubit includes redoing the process for generating the second logical qubit having the ancilla state upon detecting an error about the ancilla state.

8. The computer program according to claim 4, wherein the process for generating the second logical qubit and the process for executing the rotation operation are repeated in such a manner that, when the rotation operation executed by using, as input, the second logical qubit generated by applying a first designated rotation angle results in the inverse rotation, an angle twice the first designated rotation angle is set as a second designated rotation angle to be applied to a next process for generating the second logical qubit.

9. A quantum computation method executed by a computer for performing a rotation operation on a first logical qubit (5) using an ancilla state preparation circuit including a rotation gate and a gate teleportation circuit (3), the quantum computation method comprising:
setting, when a quantum gate to be applied to the first logical qubit (5) is a gate indicating the rotation operation, a target rotation angle set in the gate indicating the rotation operation to a designated rotation angle;
generating a first state encoded using a plurality of physical qubits used in the ancilla state preparation circuit;
generating a second logical qubit (4) having a predetermined ancilla state by applying, based on the designated rotation angle, the rotation gate to the encoded first state; and
executing the rotation operation by executing the gate teleportation circuit using the first logical qubit (5) and the second logical qubit (4) as input.

10. An information processing apparatus including processing means for performing a rotation operation on a first logical qubit (5) using an ancilla state preparation circuit including a rotation gate and a gate teleportation circuit (3), the processing means being configured to perform a process comprising:
setting, when a quantum gate to be applied to the first logical qubit (5) is a gate indicating the rotation operation, a target rotation angle set in the gate indicating the rotation operation to a designated rotation angle;
generating a first state encoded using a plurality of physical qubits used in the ancilla state preparation circuit;
generating a second logical qubit (4) having a predetermined ancilla state by applying, based on the designated rotation angle, the rotation gate to the encoded first state; and
executing the rotation operation by executing the gate teleportation circuit using the first logical qubit (5) and the second logical qubit (4) as input.
